# FASCICULE DE BREVET EUROPEEN

(11) **EP 2 630 834 B1**
(45) Date de publication et mention de la délivrance du brevet: **04.04.2018**
(21) Numéro de dépôt: 11832102.5
(22) Date de dépôt: 12.10.2011
(51) Int. Cl.: H04W 76/02, H04W 48/20, H04W 8/26, H04L 12/911, H04L 29/06, H04W 12/08, H04W 12/12, H04W 36/00, H04W 36/08, H04W 48/08, H04W 74/00, H04W 88/16, H04W 92/20

(54) **CONNEXION DYNAMIQUE D'UN TERMINAL MOBILE À UN RÉSEAU LOCAL**
DYNAMISCHE VERBINDUNG EINES MOBILEN ENDGERÄTS MIT EINEM LOKALEN NETZWERK
DYNAMIC CONNECTION OF A MOBILE TERMINAL TO A LOCAL NETWORK

(30) Priorité: 22.10.2010 FR 1058662
(43) Date de publication de la demande: 28.08.2013
(73) Titulaire: Orange, 75015 Paris (FR)
(72) Inventeur: DE LA FOREST DIVONNE, Aymeric, F-14650 Carpiquet (FR); REBILLON, Jacques-Olivier, F-14220 Mutrecy (FR)
(74) Mandataire: Cabinet Plasseraud
(86) Numéro de dépôt international: PCT/FR2011/052377
(87) Numéro de publication internationale: WO 2012/052660

(56) Documents cités:
- EP-A1- 2 019 560
- US-A1- 2007 066 306
- US-A1- 2009 190 545

## Description

La présente invention concerne la portabilité d'une communication d'un terminal mobile, par un réseau local.

Dans le cadre par exemple d'usages multimédias par des terminaux mobiles, une étude montre qu'actuellement au moins 40% des communications sont effectuées via des réseaux locaux de courte portée (par exemple des réseaux sans fil de type wifi). Souvent, cette communication s'établit au domicile d'utilisateurs de tels terminaux en particulier via une passerelle entre un réseau local du type précité et un réseau étendu (tel que l'Internet).

Les terminaux les plus récents intègrent même une fonctionnalité de portage d'une communication wifi en cours (voix ou données), d'un réseau local à l'autre, lorsque le terminal est par exemple en situation de mobilité. Dans une telle application de communication libre via des points d'accès successifs (ou « hotspots communautaires » en réseau), des passerelles de réseaux locaux domestiques forment chacune un point d'accès. Par exemple, un appel téléphonique en cours d'un terminal mobile situé dans le réseau local d'une passerelle sera relayé par cette passerelle vers le réseau étendu, en voix sur IP (VoIP). Si le terminal sort du champ de portée de cette passerelle et entre dans le champ d'une autre passerelle, il est détecté dans le réseau local de cette nouvelle passerelle et cette dernière peut relayer la communication en VoIP.

Dans une réalisation, il est mis à disposition de la passerelle un identifiant dédié ou « SSID » (pour « Service Set Identifier »). Il s'agit d'un nom identifiant un réseau sans fil selon la norme IEEE 802.11 et pouvant être composé de 32 caractères.
La passerelle peut utiliser deux identifiants SSID indépendants :
- un SSID privé pour une utilisation habituelle et domestique de la passerelle, et
- un SSID public (dans le cadre d'applications « wifi communautaires »), pour des terminaux visiteurs ayant accès au service ponctuel de la passerelle en tant que hotspot.

Il est procédé à une authentification sur la base de ces identifiants, lesquels sont habituellement des identifiants statiques (par exemple de type login et mot de passe, en messagerie).

Dans un tel exemple, l'utilisateur d'un terminal doit accéder à ses courriels pour une situation urgente. Le terminal localise d'abord un point d'accès wifi (un service de localisation de bornes wifi pouvant exister à cet effet). Le terminal peut s'y connecter une fois que l'utilisateur a renseigné ses identifiants sur un portail d'accès des hotspots locaux.

Une telle application de wifi communautaire présente toutefois des limitations.

Une première limitation concerne le nombre de connexions simultanées qui ne peuvent être associées qu' à un unique SSID communautaire, lequel est lié au nombre d'adresses IP disponibles. Aujourd'hui, on ne compte que cinq connexions au maximum par passerelle en tant que point d'accès.
Une autre limitation concerne le débit disponible. Le service de « wifi communautaire » ne propose que 1 Mb/s à partager par tous les visiteurs, ce qui divise le débit de 1 Mb/s jusqu'à 200 Kb/s (pour cinq connexions simultanées).
En pratique, lorsqu'un terminal tente de se connecter à une passerelle avec un identifiant SSID communautaire, si ce SSID est saturé, la passerelle ne peut accepter la nouvelle demande de connexion (si cinq terminaux y sont déjà connectés). Ensuite, en cas de non-association wifi à un AP communautaire, le terminal tente de se connecter à un point d'accès le plus proche et fournissant un service similaire. Ce terminal n'aura cependant aucune certitude que la connexion pourra être effective avec un autre point d'accès (ce dernier pouvant être aussi saturé) et aucun message n'est prévu pour l'en informer.

Le document US 2007/0066306 divulgue un système de relais de communication entre points d'accès dans le contexte d'un réseau wifi, dans lequel des identifiants SSID distincts sont utilisés par les points d'accès.

La présente invention vient améliorer la situation.

Elle propose à cet effet un procédé de connexion d'un terminal à un réseau de télécommunication via un point d'accès selon la revendication 1. Dans un tel procédé, suite à une requête de connexion d'un terminal à un premier point d'accès, ce premier point d'accès détermine s'il dispose de ressource pour servir le terminal et, le cas échéant, sert le terminal.

Au sens de l'invention, le premier point d'accès est connecté à au moins un deuxième point d'accès, et en particulier, en cas d'impossibilité de servir le terminal :
- le premier point d'accès demande au moins au deuxième point d'accès une ressource pour servir le terminal, et
- en cas de disponibilité de ressource auprès du deuxième point d'accès, le premier point d'accès transfère au terminal des données pour se connecter au deuxième point d'accès.

Ainsi, l'invention permet avantageusement d'offrir une connexion de proche en proche des points d'accès pour connaître à un instant donné les disponibilités des points d'accès à proximité, notamment en termes de débit.

En revanche, en cas d'indisponibilité de ressource auprès du deuxième point d'accès, le procédé peut se poursuivre par la transmission du premier point d'accès au terminal d'un message d'impossibilité de connexion. Préférentiellement, le premier point d'accès prend une telle décision après avoir sollicité tous les points d'accès capables de communiquer avec le premier point d'accès. Le premier point d'accès utilise au moins :
- un premier identifiant de connexion pour dialoguer avec le terminal, et
- un deuxième identifiant de connexion, distinct du premier identifiant, pour dialoguer avec le deuxième point d'accès.
Cette disposition permet avantageusement de réserver un identifiant de connexion dédié (par exemple de type SSID, pour « Service Set Identifier ») pour les communications entre points d'accès seulement et conserver un identifiant de connexion avec un terminal mobile, et ce, de manière à éviter notamment des intrusions.
Avantageusement, les communications faisant intervenir au moins le deuxième identifiant sont en outre cryptées.
Avantageusement encore, l'invention peut être mise en oeuvre auprès d'une simple passerelle domestique pour le service précité « wifi communautaire ». Ainsi, le premier point d'accès peut être une passerelle d'un réseau local domestique vers un réseau étendu, la communication du terminal avec la passerelle étant établie par une liaison sans fil. La passerelle utilise alors préférentiellement encore un troisième identifiant de connexion pour dialoguer avec un équipement domestique du réseau local.
En cas de disponibilité de ressource auprès du deuxième point d'accès, le premier point d'accès réserve préférentiellement pour le terminal une connexion auprès du deuxième point d'accès et transfère au terminal, parmi lesdites données de connexion, au moins un identifiant de réservation de connexion auprès du deuxième point d'accès.
Bien entendu, un identifiant du deuxième point d'accès est transmis aussi au terminal. Ainsi, il suffit au terminal de s'adresser ensuite au deuxième point d'accès et de lui communiquer un identifiant de réservation pour disposer de la ressource détectée par le premier point d'accès.

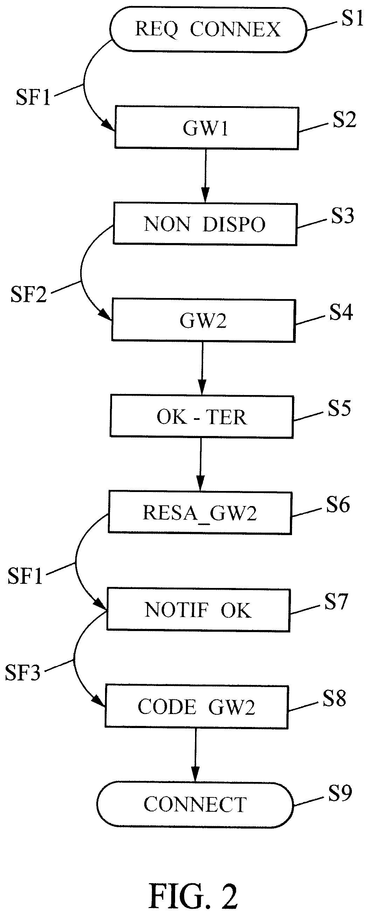

La présente invention vise aussi un programme informatique selon la revendication 4, comportant des instructions pour la mise en oeuvre du procédé ci-avant, lorsque ce programme est exécuté par un processeur. Un exemple d'organigramme d'un algorithme général d'un tel programme est illustré sur la figure 2 commentée ci-après.

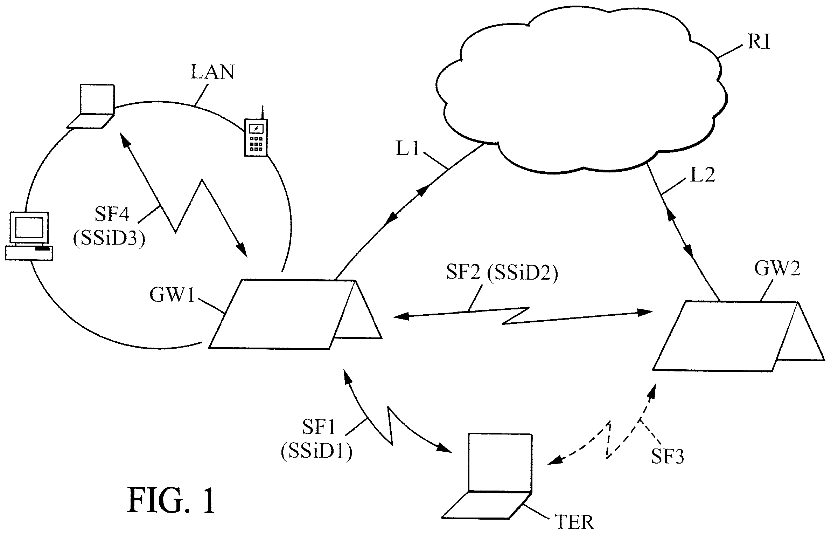

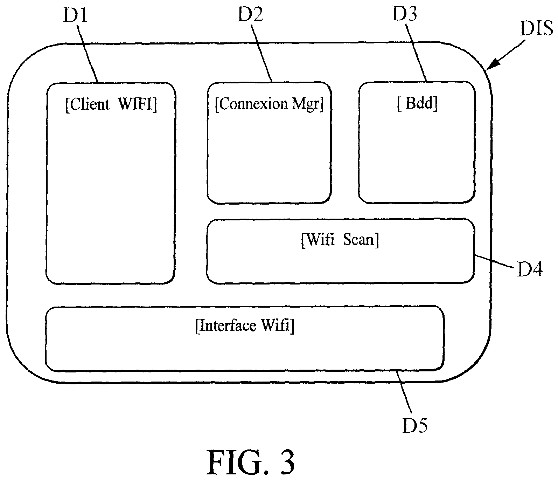

La présente invention vise aussi un dispositif selon la revendication 5 de connexion d'un terminal à un réseau de télécommunication, en tant que point d'accès du terminal à ce réseau, et comportant en particulier des moyens pour mettre en oeuvre le procédé ci-avant, en tant que premier point d'accès. Un exemple d'architecture d'un tel dispositif est illustré sur la figure 3 commentée ci-après.
Par exemple, un tel dispositif peut comporter avantageusement des moyens pour jouer le rôle de passerelle entre un réseau local domestique et le réseau de télécommunication précité.
Un tel dispositif peut comporter alors :
- des moyens de communication avec un ou plusieurs points d'accès, en tant que deuxièmes points d'accès,
- et des moyens d'écoute d'informations de disponibilité de ces autres points d'accès pour servir un terminal.
De tels moyens d'écoute peuvent alors procéder régulièrement pour se ternir à jour des disponibilités de ressource des points d'accès reliés au premier point d'accès.
La présente invention vise aussi un système de connexion d'un terminal à un réseau de télécommunication, via un point d'accès du terminal à ce réseau, et comportant en particulier au moins :
- un dispositif en tant que premier point d'accès selon l'invention, et
- un deuxième point d'accès comportant des moyens de communication au premier point d'accès, d'informations de disponibilité de ressource pour servir un terminal.
Un exemple de configuration d'un tel système est illustré sur la figure 1 commentée ci-après.
D'ailleurs, d'autres avantages et caractéristiques de l'invention apparaîtront à la lecture de la description donnée ci-après à titre d'exemple et à l'examen des dessins annexés sur lesquels :
- la figure 1 illustre un système à plusieurs points d'accès et un terminal, dans un exemple de réalisation de l'invention,
- la figure 2 résume les étapes d'un exemple de procédé au sens de l'invention,
- la figure 3 illustre schématiquement la structure d'un point d'accès dans un exemple de réalisation de l'invention.

En référence à la figure 1, un terminal client TER cherche à se connecter au réseau étendu RI (par exemple l'Internet) via la passerelle GW1, par la liaison L1 avec le réseau étendu et la liaison sans fil SF1 (par exemple wifi) avec le réseau local LAN que gère la passerelle GW1.

Ainsi, le terminal TER émet une requête de connexion et la passerelle GW1 utilise un identifiant SSID1 public pour répondre, dans cet exemple donné, qu'elle n'est pas en mesure de satisfaire la requête du terminal TER (par exemple parce qu'elle est déjà connectée à cinq terminaux ayant épuisé son débit disponible). Dans ce cas, la passerelle GW1 utilise un deuxième identifiant dédié SSID2 pour émettre une demande de disponibilité à d'autres passerelles GW2 suffisamment voisines pour être reliées via un lien sans fil SF2 à la première passerelle GW1. Si une deuxième passerelle GW2 voisine répond favorablement à cette demande (débit disponible suffisant) via le lien SF2, la passerelle GW1 utilise l'identifiant SSID1 pour indiquer au terminal TER qu'une passerelle GW2 serait favorable pour satisfaire la requête de connexion du terminal TER. Bien entendu, la passerelle GW1 dispose en outre au moins d'un troisième identifiant SSID3 pour les sessions propres aux équipements habituels du réseau domestique LAN (par exemple via des liens tels que le lien wifi SF4 représenté sur la figure 1). Cet identifiant SSID3 est privé et non diffusé (non broadcasté à l'extérieur du réseau LAN).

Le terminal TER cherche ensuite à utiliser le lien sans fil SF3 pour se connecter à la deuxième passerelle GW2.

On se réfère maintenant à la figure 2 résumant les étapes d'un exemple de procédé au sens de l'invention.

A l'étape de début S1, le terminal client TER demande à se connecter sur un point d'accès tel que la passerelle GW1, en utilisant le lient SF1 (étape S2). Toutefois, à l'étape S3, la passerelle GW1 n'ayant plus de disponibilité (étape S3), transmet la requête vers d'autres passerelles en tant que points d'accès situés à proximité (étape S4). La passerelle GW2 répond à cette requête en indiquant par exemple qu'il reste suffisamment de débit pour servir deux terminaux par exemple (étape S5). La première passerelle GW1 réserve auprès de la deuxième passerelle GW2 une part de débit disponible pour un terminal tel que le terminal TER (étape S6) et, à l'étape S7, transmet au terminal TER une notification selon laquelle :
- une connexion est disponible au débit nécessaire sur la passerelle GW2,
- cette connexion est réservée sur la passerelle GW2,
- et comportant des paramètres de connexion, parmi au moins une adresse MAC ou BSSID, ainsi qu'un code de réservation par exemple.

Bien entendu, si en variante aucune passerelle ne répond favorablement à la requête de la première passerelle GW1, cette dernière renvoie à l'étape S7 un message d'erreur indiquant qu'aucun point d'accès n'est disponible.

Le terminal client peut se connecter alors à la deuxième passerelle GW2 pour fournir son code de réservation à l'étape S8 (via le lien SF3) et le terminal est finalement connecté via la deuxième passerelle GW2 à l'étape de fin S9.

Il est préférable que les communications ci-avant, utilisant en particulier les SSID, soient cryptées pour éviter toute intrusion (« man in the middle » ou autres). A cet effet, l'électronique de connexion wifi de la passerelle GW1 supporte avantageusement le mode « multi-SSID ».

On a représenté sur la figure 3 un exemple d'architecture d'un point d'accès DIS au sens de l'invention qui peut, dans un exemple de réalisation, être une passerelle notamment dans le cadre d'un service de « wifi communautaire ». La référence D1 désigne une interface publique pour les terminaux mobiles par exemple connectés en mode wifi au point d'accès (client wifi). La référence D2 désigne un module de gestion de l'ensemble des connexions, avec des terminaux mobiles ou avec d'autres points d'accès (module « Connexion Mgr »). Il inscrit dans une base de données D3 l'ensemble des échanges. Il est également garant des disponibilités des points d'accès à proximité et gère les tranches temporelles (ou « slots ») de connexion pour un terminal client. Le module mémoire D3 stocke la base de données précitée, laquelle indique notamment l'état des connexions des points d'accès à proximité. Le point d'accès DIS comporte avantageusement en outre une interface privée D4 pour les points d'accès à proximité qui balaie en tâche de fond (« Wifi Scan ») les informations de disponibilité des autres point d'accès, en temps réel. Il s'agit des moyens précités « d'écoute » d'informations de disponibilité de ressource auprès d'autres points d'accès. Ce module D4 procède aussi au décryptage des données à fournir au module de gestion D2. Bien entendu, le point d'accès DIS comporte en outre une interface wifi D5 (interface physique telle qu'une carte wifi supportant les communications en mode « multi-SSID »).

En opération, le module D4 récupère l'ensemble des données fournies par les points d'accès voisins (par exemple à intervalles réguliers, toutes les minutes), en utilisant le cas échéant pour une communication vers les points d'accès l'identifiant dédié SSID2. Il fournit alors au module de gestion D2 une topographie à jour des connexions et débits des points d'accès du voisinage du point d'accès DIS, ces données étant ensuite stockées dans la base de données D3.

Lorsqu'un terminal client se connecte au point d'accès DIS pour solliciter un accès, via le module d'interface wifi D5, la requête du client est dirigée vers le module client wifi D1 du point d'accès pour gérer l'ensemble de la relation avec le client. Ce module D1 interroge le module de gestion D2 afin de connaître l'état des connexions internes et éventuellement externes pour envisager un point d'accès alternatif. Si aucune ressource (ou « slot ») n'est disponible sur le point d'accès DIS, une requête est émise à la base D3 pour consulter les points d'accès disponibles du voisinage. Si une ressource est disponible auprès d'un point d'accès alternatif du voisinage, le module de gestion D2 en informe le client wifi D1, lequel communique ensuite les informations de connexion (adresse MAC ou BSSID, ainsi qu'un code de réservation) au terminal client via l'interface publique D5. Sur réception de ces informations, le terminal client peut se connecter au point d'accès alternatif.

Bien entendu, la présente invention ne se limite pas à la forme de réalisation décrite ci-avant à titre d'exemple ; elle s'applique à d'autres variantes.

Ainsi, par exemple, on a décrit ci-avant des points d'accès susceptibles de se présenter sous la forme de passerelles, notamment dans le cadre d'un service de portabilité par « wifi communautaire ». L'invention s'applique néanmoins à tout ensemble de points d'accès capables de dialoguer entre eux, de façon plus générale.

Par ailleurs, on a décrit ci-avant en référence à la figure 2 la situation d'un point d'accès capable ou non de servir un terminal. L'invention s'applique aussi pour trouver un débit optimum par rapport à une demande de débit particulière d'un terminal donné. Un service utilisant la présente invention permettrait par exemple à un utilisateur référencé de se connecter au point d'accès disposant du débit le plus élevé (avec peu ou pas de connexion pour des visiteurs).

## Revendications

1. Procédé de connexion d'un terminal à un réseau de télécommunication de type wifi, via un point d'accès, dans lequel, suite à une requête de connexion d'un terminal à un premier point d'accès, ledit premier point d'accès détermine s'il dispose de ressource pour servir le terminal et, le cas échéant, sert le terminal,
le premier point d'accès étant connecté à au moins un deuxième point d'accès, en cas d'impossibilité de servir le terminal :
- le premier point d'accès (GW1) demandant au moins au deuxième point d'accès (GW2) une ressource pour servir le terminal, et
- en cas de disponibilité de ressource auprès du deuxième point d'accès, le premier point d'accès transférant au terminal (TER) des données pour se connecter par une liaison de type wifi au deuxième point d'accès,
et le premier point d'accès utilisant au moins :
- un premier identifiant de connexion de type SSID (SSID1) pour dialoguer avec le terminal, et
- un deuxième identifiant de connexion, de type SSID (SSID2) mais distinct du premier identifiant, pour dialoguer avec le deuxième point d'accès, le deuxième identifiant de connexion étant dédié pour les communications entre points d'accès seulement.

2. Procédé selon la revendication 1, dans lequel le premier point d'accès est une passerelle d'un réseau local domestique vers un réseau étendu, la communication du terminal avec la passerelle étant établie par une liaison sans fil (SF1), **caractérisé en ce que** la passerelle utilise un troisième identifiant de connexion (SSID3) pour dialoguer avec un équipement domestique du réseau local.

3. Procédé selon l'une des revendications précédentes, **caractérisé en ce que**, en cas de disponibilité de ressource auprès du deuxième point d'accès, le premier point d'accès réserve pour le terminal une connexion auprès du deuxième point d'accès et transfère au terminal, parmi lesdites données de connexion, au moins un identifiant de réservation de connexion auprès du deuxième point d'accès.

4. Programme informatique comportant des instructions pour la mise en oeuvre du procédé selon l'une des revendications précédentes, lorsque ce programme est exécuté par un processeur.

5. Dispositif de connexion (GW1) d'un terminal à un réseau de télécommunication, en tant que point d'accès du terminal audit réseau, comportant des moyens pour la mise en oeuvre du procédé selon l'une des revendications 1 à 3, en tant que premier point d'accès.

6. Dispositif selon la revendication 5, **caractérisé en ce qu'**il comporte des moyens pour jouer le rôle de passerelle entre un réseau local domestique (LAN) et ledit réseau de télécommunication (RI).

7. Dispositif selon l'une des revendications 5 et 6, **caractérisé en ce qu'**il comporte :
- des moyens de communication avec un ou plusieurs points d'accès, en tant que deuxièmes points d'accès,
- et des moyens (D4) d'écoute d'informations de disponibilité desdits autres points d'accès.

8. Système de connexion d'un terminal à un réseau de télécommunication, via un point d'accès du terminal audit réseau, **caractérisé en ce qu'**il comporte au moins un dispositif en tant que premier point d'accès (GW1) selon l'une des revendications 5 à 7, et un deuxième point d'accès (GW2) comportant des moyens de communication audit premier point d'accès, d'informations de disponibilité de ressource pour servir un terminal.

## Patentansprüche

1. Verfahren zur WLAN-Verbindung eines Endgeräts mit einem Telekommunikationsnetzwerk über einen Zugangspunkt, wobei nach einer Verbindungsanforderung eines Endgeräts mit einem ersten Zugangspunkt der erste Zugangspunkt bestimmt, ob er über eine Ressource verfügt, um das Endgerät zu bedienen, und ggf. das Endgerät bedient,
wobei der erste Zugangspunkt mit mindestens einem zweiten Zugangspunkt verbunden ist,
im Fall einer Unmöglichkeit, das Endgerät zu bedienen:
- der erste Zugangspunkt (GW1) mindestens vom zweiten Zugangspunkt (GW2) eine Ressource anfordert, um das Endgerät zu bedienen, und
- im Fall der Verfügbarkeit einer Ressource beim zweiten Zugangspunkt der erste Zugangspunkt an das Endgerät (TER) Daten überträgt, um sich über eine Verbindung von der Art WLAN mit dem zweiten Zugangspunkt zu verbinden,
wobei der erste Zugangspunkt mindestens verwendet:
- eine erste Verbindungskennung von der Art SSID (SSID1), um mit dem Endgerät zu dialogisieren, und
- eine zweite Verbindungskennung von der Art SSID (SSID2), aber anders als die erste Kennung, um mit dem zweiten Zugangspunkt zu dialogisieren, wobei die zweite Verbindungskennung nur für die Kommunikationen zwischen Zugangspunkten bestimmt ist.

2. Verfahren nach Anspruch 1, wobei der erste Zugangspunkt ein Gateway von einem lokalen Heimnetzwerks zu einem Fernnetzwerk ist, wobei die Kommunikation des Endgeräts mit dem Gateway durch eine drahtlose Verbindung (SF1) aufgebaut wird, **dadurch gekennzeichnet, dass** das Gateway eine dritte Verbindungskennung (SSID3) verwendet, um mit einer Heimausrüstung des lokalen Netzwerks zu dialogisieren.

3. Verfahren nach einem der vorhergehenden Ansprüche, **dadurch gekennzeichnet, dass** im Fall der Verfügbarkeit einer Ressource beim zweiten Zugangspunkt der erste Zugangspunkt für das Endgerät eine Verbindung mit dem zweiten Zugangspunkt reserviert und unter den Verbindungsdaten mindestens eine Verbindungsreservierungskennung beim zweiten Zugangspunkt an das Endgerät überträgt.

4. Computerprogramm, das Anweisungen zur Durchführung des Verfahrens nach einem der vorhergehenden Ansprüche aufweist, wenn dieses Programm von einem Prozessor ausgeführt wird.

5. Verbindungsvorrichtung (GWI) eines Endgeräts mit einem Telekommunikationsnetz als Zugangspunkt des Endgeräts zum Netz, die Einrichtungen zur Durchführung des Verfahrens nach einem der Ansprüche 1 bis 3 als erster Zugangspunkt aufweist.

6. Vorrichtung nach Anspruch 5, **dadurch gekennzeichnet, dass** sie Einrichtungen aufweist, um die Aufgabe eines Gateways zwischen einem lokalen Heimnetzwerk (LAN) und dem Telekommunikationsnetzwerk (RI) zu erfüllen.

7. Vorrichtung nach einem der Ansprüche 5 und 6, **dadurch gekennzeichnet, dass** sie aufweist:
- Kommunikationseinrichtungen mit einem oder mehreren Zugangspunkten als zweiten Zugangspunkten,
- und Einrichtungen (D4) zum Abhören von Verfügbarkeitsinformationen der anderen Zugangspunkte.

8. Verbindungssystem eines Endgeräts mit einem Telekommunikationsnetz über einen Zugangspunkt des Endgeräts zum Netz, **dadurch gekennzeichnet, dass** es mindestens eine Vorrichtung als erster Zugangspunkt (GWI) nach einem der Ansprüche 5 bis 7 und einen zweiten Zugangspunkt (GW2) aufweist, der Einrichtungen zur Übermittlung an den ersten Zugangspunkt von Informationen über die Ressourcenverfügbarkeit zum Bedienen eines Endgeräts aufweist.

## Claims

1. Method for connecting a terminal to a telecommunication network of Wi-Fi type, via an access point, wherein, following a request to connect a terminal to a first access point, said first access point determines whether it has a resource available for serving the terminal and, if so, serves the terminal, the first access point being connected to at least one second access point, in the event it is not possible to serve the terminal:
- the first access point (GW1) requesting, at least from the second access point (GW2), a resource for serving the terminal; and
- in the event of a resource being available from the second access point, the first access point transferring, to the terminal (TER), data for it to connect itself via a link of Wi-Fi type to the second access point,
and the first access point using at least:
- a first connection identifier of SSID type (SSID1) for dialoguing with the terminal; and
- a second connection identifier, of SSID type (SSID2) but distinct from the first identifier, for dialoguing with the second access point, the second connection identifier being dedicated solely to communications between access points.

2. Method according to Claim 1, wherein the first access point is a gateway from a domestic local area network to an extended network, the communication of the terminal with the gateway being established by a wireless link (SF1), **characterized in that** the gateway uses a third connection identifier (SSID3) for dialoguing with a domestic device of the local area network.

3. Method according to either of the preceding claims, **characterized in that**, in the event of a resource being available from the second access point, the first access point reserves, for the terminal, a connection to the second access point and transfers, to the terminal, among said connection data, at least one connection reservation identifier for the connection to the second access point.

4. Computer program including instructions for implementing the method according to one of the preceding claims, when this program is run by a processor.

5. Device (GW1) for connecting a terminal to a telecommunication network, as an access point for the terminal to access said network, including means for implementing the method according to one of Claims 1 to 3, as a first access point.

6. Device according to Claim 5, **characterized in that** it includes means for acting as a gateway between a domestic local area network (LAN) and said telecommunication network (RI).

7. Device according to either of Claims 5 and 6, **characterized in that** it includes:
- means for communicating with one or more access points, as second access points;
- and means (D4) for listening for information on the availability of said other access points.

8. System for connecting a terminal to a telecommunication network, via an access point for the terminal to access said network, **characterized in that** it includes at least one device as a first access point (GW1) according to one of Claims 5 to 7, and a second access point (GW2) including means for communicating, to said first access point, information on the availability of a resource for serving a terminal.
